# Europäisches Patentamt
# European Patent Office
# Office européen des brevets

(19)

(11) Veröffentlichungsnummer: **0 081 530**
**B1**

(12)

# EUROPÄISCHE PATENTSCHRIFT

(45) Veröffentlichungstag der Patentschrift:
05.11.86

(21) Anmeldenummer: **82901836.5**

(22) Anmeldetag: **21.06.82**

(86) Internationale Anmeldenummer:
**PCT/CH 82/00080** *

(87) Internationale Veröffentlichungsnummer:
**WO 83/00022 (06.01.83 Gazette 83/01)**

(51) Int. Cl.⁴: **B 01 D 3/22,** B 01 D 59/32

(54) **EINRICHTUNG ZUM STOFFAUSTAUSCH ZWISCHEN EINEM GAS UND EINER FLUSSIGKEIT.**

(30) Priorität: **23.06.81 CH 4125/81**

(43) Veröffentlichungstag der Anmeldung:
**22.06.83 Patentblatt 83/25**

(45) Bekanntmachung des Hinweises auf die Patenterteilung:
**05.11.86 Patentblatt 86/45**

(84) Benannte Vertragsstaaten:
**DE FR GB NL**

(56) Entgegenhaltungen:
**EP-A-0 059 449**
**DE-A-2 028 379**
**DE-B-1 040 514**
**DE-B-1 254 124**
**FR-A-1 303 353**
**FR-A-1 317 743**
**FR-A-1 355 207**
**FR-E-8 212**
**GB-A-817 579**
**GB-A-1 126 586**
**US-A-2 319 814**
**US-A-3 985 625**

(73) Patentinhaber: **Ingenieurbüro Dr. Ludwig Silberring AG, Postfach 368, CH- 8037 Zürich (CH)**

(72) Erfinder: **SILBERRING, Ludwig, Wipkingerplatz 7, CH- 8037 Zürich (CH)**

(74) Vertreter: **Maspoli, Renato A., Dipl.- Chem.Ing.ETH, Patentanwälte R.A. Maspoli und Partner Promenadengasse 18, CH- 8001 Zürich (CH)**

EP 0 081 530 B1

LIBER, STOCKHOLM 1986

## Beschreibung

Die vorliegend beschriebene Erfindung betrifft eine Stoffaustauschkolonne für eine abwärts strömende Flüssigkeit und ein im Gegenstrom dazu aufwärts strömendes Gas, bestehend aus mehreren in einem Druckgehäuse übereinander, zum Durchströmen des Gases mit Oeffnungen versehen, angeordneten Böden.

Wenn die Löslichkeit des am Stoffaustausch teilnehmenden Gases in der ebenfalls am Stoffaustausch teilnehmenden Flüssigkeit gering ist und wenn ausserdem der Stoffaustausch von einer chemischen Reaktion oder von einer Isotopenreaktion in der flüssigen Phase abhängig ist, wobei die Kinetik dieser Reaktion im Vergleich zur Kinetik des Stoffaustausches des gelösten Gases mit der Gasphase langsam ist, dann ist eine lange Verweilzeit der Flüssigkeit im Kontakt mit dem Gas zur Erreichung von günstigen Austauschresultaten notwendig. Dies lässt sich dann kostengünstig erreichen, wenn ein möglichst grosser Anteil des Kolonnenvolumens durch die Flüssigkeit eingenommen wird. Wenn darüber hinaus die verfahrenstechnischen Bedingungen eine Anwendung von mehreren Böden verlangen, dann ist deren Anordnung in möglichst geringer Anzahl von Druckbehältern anzustreben, wobei das Prinzip des Gegenstroms zu wahren ist und Rückvermischungsströme zu meiden sind. Wesentlich für das Erreichen eines derartigen Stoffaustauschvorganges ist dabei ein ununterbrochener Flüssigkeitsverlauf in der Kolonne.

Bekannt sind Böden für in Stoffaustauschkolonnen, die jeweils in einem Druckbehälter übereinander angeordnet sind. Die Flüssigkeit fliesst dabei von jedem Boden über einen Ueberlauf zum nächsttieferen Boden. Der Ueberlauf ist im Gasraum angeordnet und lediglich im untersten Bereich des Verschlusses mit Flüssigkeit gefüllt. Wegen der hydrodynamischen Bedingungen kann bei solchen Kolonnen nur etwa 1/4 der Distanz zwischen den Böden als eigentlicher Kontaktraum, d.h. als Raum, in welchem die Flüssigkeit mit den Gasblasen tatsächlich in Kontakt steht, benutzt werden.

Bekannt sind ebenfalls Kolonnen, bei denen die Flüssigkeit hauptsächlich auf der Oberfläche von Packungskörpern abwärts, das Gas hingegen durch die Zwischenräume dieser Körper aufwärts fliesst. Der durch die Flüssigkeit ausgefüllte Volumenanteil solcher Kolonnen ist noch kleiner als im vorhin beschriebenen Fall.

Bekannt sind auch Kolonnen, die nahezu vollständig mit Flüssigkeit gefüllt sind, wobei das mit dieser Flüssigkeit in Kontakt zu bringende Gas in Form von Blasen aufwärts fliesst. Die Flüssigkeit wird dabei in allen Richtungen vermischt, so dass eine solche Kolonne höchstens die Aufgabe eines einzigen theoretischen Bodens zu erfüllen vermag.

Schliesslich sind Kolonnen bekannt, bei welchen auf den einzelnen Böden Maschinen mit einem mechanischen, elektrischen oder einem intensivierten hydraulischen Antrieb zur Erreichung des Stoffaustausches eingesetzt werden. Der letztgenannte Fall liegt vor, wenn der gasseitige Druckverlust den zur Verfügung stehenden hydrostatischen Druck der Flüssigkeit übersteigt und Pumpen zu deren Beförderung zwischen den Böden eingesetzt werden müssen. Solche Kolonnenböden sind jedoch kostspielig in der Anschaffung und im Unterhalt und können wegen ihrer Störanfälligkeit oft lange Betriebsunterbrechungen verursachen.

Die vorveröffentlichte GB-A-1 126 586 lehrt eine Austauschkolonne mit Böden, deren Flüssigkeits-Abläufe so beschaffen sind, dass die Flüssigkeit jeweils in Form einer Wand auf den nächstunteren Boden, trifft und so den Gas-Aufstieg durch die Flüssigkeits-Ablaufzone verhindern soll. Dies geschieht jedoch gemäss der Patentschrift selbst (S. 1, Z. 49) "substantially..."; die Zone des Auftreffens der Flüssigkeitswand auf den unteren Boden ist hydrodynamisch nicht definierbar und jeder hydrostatische Druck, welcher momentan kleiner ist als derjenige auf dem oberen Boden, bewirkt automatisch Gasdurchtritt durch die Flüssigkeits-Ablaufzone. Daher kann bei der Flüssigkeitskolonne in dieser Anordnung auch nicht voneiner hydrostatisch nicht unterbrochenen Flüssigkeitssäule gesprochen werden.

Auch in der EP-A-0 059 449, Veröffentlichungsdatum 09.08.82, werden Böden zur Verwendung in Gas-Flüssigkeits-Massenaustauschkolonnen beschrieben und beansprucht. Der dabei erreichte Flüssigkeitsverlauf kann als ununterbrochen bezeichnet werden (Fig. 1). Die Böden gemäss dieser Veröffentlichung unterscheiden sich von denjenigen gemäss dieser Erfindung dadurch, dass Zu- und Ableitung nicht zentral zusammengefasst sind, dass der Flüssigkeitsstrom nicht durch Leitbleche geführt ist (Rückmischung:) und vor allem dadurch, dass mit den genannten Böden der Flüssigkeitsfüllgrad der Kolonne nicht gross gesteigert werden kann.

Zur Erreichung der oben genannten wichtigen Vorteile wird durch die vorliegende Erfindung eine neue Stoffaustauschkolonne für eine abwärts strömende Flüssigkeit und ein im Gegenstrom aufwärts strömendes Gas vorgeschlagen, welche aus mehreren in einem Druckgehäuse 19 übereinander, zum Durchströmen des Gases mit Oeffnungen versehenen Böden 1, 2, 3 und aus durchgehend von Boden zu Boden führenden Verbindungskanälen 9, 13, die durch die Achse des Druckgehäuses 19 umschliessende Halbkreisflächen und einer zentralen Trennwand 18 gebildet sind, wobei jeweils der zum Boden 2 führende Verbindungskanal 9 auf der einen Seite der Trennwand 18 und der abführende Verbindungskanal 13 auf der gegenüberliegenden Seite der Trennwand angeordnet ist, besteht,

wobei jeder Boden 1, 2, 3 unterhalb des unteren Teils 10 des zum Boden führenden Verbindungskanals keine Oeffnungen aufweist, so dass die Strömungsrichtung der Flüssigkeit umgekehrt wird und der Austritt der Flüssigkeit in den von den Gasblasen durchsetzten Flüssigkeitsraum 6 vertikal nach oben durch den letzten Teil 11 des Verbindungskanals 9 erfolgt,

und wobei in dem von den Gasblasen durchsetzten Flüssigkeitsraum 6 auf jedem Boden 1, 2, 3 teilzylindrische Wände 14, 15, 16, 17, die zueinander und mit den Halbkreisflächen der Verbindungskanäle 9, 13 sowie mit der Wand des Druckgehäuses 19 konzentrische Ringräume bilden, derart angeordnet sind, dass ein horizontaler Strömungsweg der Flüssigkeit entsteht, bei dem die Flüssigkeit vom zuführenden Verbindungskanal 9 zur Wand des Druckgehäuses 19 hin und dann auf der anderen Seite der Trennwand 18 in umgekehrter Richtung bis zu einem Raum 12 der zum abführenden Verbindungskanal 13 führt, geleitet wird.

Ueber dem Austauschboden kann der von Gasblasen durchsetzte Flüssigkeitsraum 6 mit Drahtgeflecht gefüllt sein.

Verwendung findet die neue Austauschanlage in Gegenstrom-Stoff-Austauschverfahren, in denen die Erreichung eines maximalen Flüssigkeits-Füllungsgrades und -Weges unter Einhaltung einer grundsätzlich senkrechten Flüssigkeitsbewegung zur Gasrichtung sowie einer minimalen Bodenbelegung durch Zu- bzw. Ableitungen. d,h. einer maximalen Ausnützung des Bodens als Lochboden, wichtig ist.

Derartige Böden sind auch wichtig bei der die Einhaltung eines hydrostatisch kontrollierten und kontinuierlich über die Kolonnenhöhe sich verändernden Druckes in Flüssig- und Gasphase.

Es genügt eben nicht, eine lange durchschnittliche Verweilzeit der Flüssigkeit auf jedem Boden zu sichern. Vielmehr ist es für das Erreichen eines guten Bodenwirkungsgrades von Bedeutung, dass die Streuung dieser Verweilzeit bei einer Betrachtung von immer kleineren Portionen des totalen Flüssigkeitsstroms klein bleibt. Ohne eine erzwungene Führung der Flüssigkeit über genügend enge, über den ganzen Boden verteilte Kanäle lässt sich diese Bedingung nicht erfüllen.

Die Gasblasen, welche durch die Flüssigkeit nach oben aufsteigen, sind vorteilhafterweise möglichst klein; sie sind also während des Aufsteigens wiederholt aufzuteilen. Dies kann dadurch geschehen, dass das Volumen, in dem die Flüssigkeit mit den Gasblasen in Kontakt steht, mit engmaschigem Drahtgeflecht ausgefüllt wird.

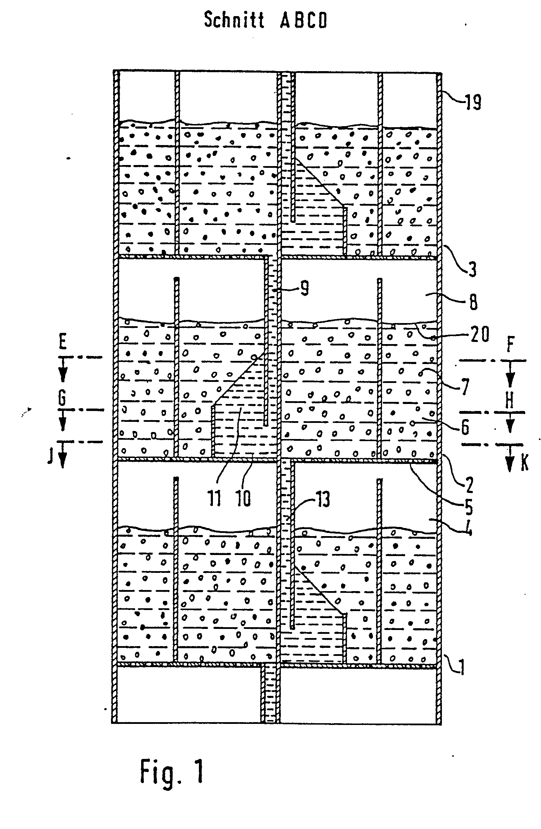

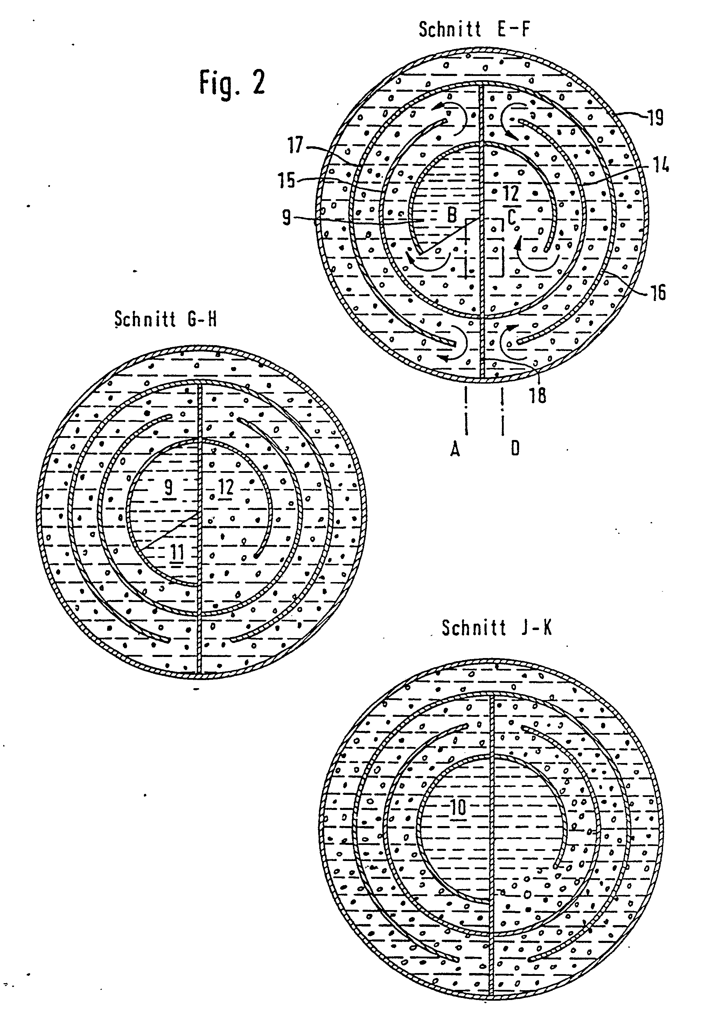

Die Erfindung wird nun anhand der beiliegenden Figuren 1 und 2 näher erläutert:

Figur 1 zeigt den Schnitt A - B - C - D aus den Figuren 2.

Die Figuren 2 zeigen die Schnitte E - F, G - H und J - K von Figur 1.

In Figur 1 fliesst die Flüssigkeit innerhalb des Behälters 19 vom Boden 3 über den Boden 2 zum Boden 1. Das Gas steigt im Gegenstrom dazu auf, u.a. durch die Oeffnungen 5 im Boden 2. Die Flüssigkeits-Verbindungskanäle 9 und 13 führen die Flüssigkeit vom Boden 3 zum Boden 2 bzw. 1. Da diese Verbindungskanäle auf verschiedenen Seiten der Trennwand 18 (Figur 2) liegen, und da die unteren Teile 10, 11 der zum unteren Boden führenden Verbindungskanäle keine Oeffnungen aufweisen, ist die kontinuierliche Flüssigkeitskolonne gewährleistet.

Die Gasräume über den Böden 1 und 2 sind mit 4 bzw. 8, die Flüssigkeit auf dem Boden 2 mit 6 und die Gasblasen mit 7 bezeichnet. Mit 20 wird die Oberfläche der Flüssigkeit auf dem Boden 2 bezeichnet.

In den Figuren 2 (waagrechte Schnitte durch eine erfindungsgemässe Kolonne) werden die gleichen Bezeichnungsziffern verwendet wie in der Figur 1.

In den Schnitten E - F und G - H bezeichnet 12 die Stelle rechts neben der Trennwand 18 oberhalb des Eintrittes in den Verbindungskanal 13 (Figur 1). Die gleiche Stelle im Schnitt J - K zeigt den öffnungsfreien Bodenteil, der zum Eintritt von 13 gehört.

In E - F sind 14 bis 17 teilzylindrische Wände, die zueinander und mit den Halbkreisflächen der Verbindungskanäle 9, 13 sowie mit der Wand des Gehäuses 19 konzentrische Ringräume bilden, sodass ein horizontaler Strömungsweg der Flüssigkeit gemäss den Pfeilen entsteht.

**Patentansprüche**

1. Stoffaustauschkolonne für eine abwärts strömende Flüssigkeit und ein im Gegenstrom aufwärts strömendes Gas, bestehend aus mehreren in einem Druckgehäuse (19) übereinander angeordneten, zum Durchströmen des Gases mit Oeffnungen versehenen Böden (1, 2, 3)

und aus durchgehend von Boden zu Boden führenden Verbindungskanälen (9, 13), die durch die Achse des Druckgehäuses (19) umschliessende Halbkreisflächen und einer zentralen Trennwand (18) gebildet sind, wobei jeweils der zum Boden (2) führende Verbindungskanal (9) auf der einen Seite der Trennwand (18) und der abführende Verbindungskanal (13) auf der gegenüberliegenden Seite der Trennwand angeordnet sind,

wobei jeder Boden (1, 2, 3) unterhalb des unteren Teils (10) des zum Boden führenden Verbindungskanals keine Oeffnungen aufweist, so dass die Strömungsrichtung der Flüssigkeit umgekehrt wird und der Austritt der Flüssigkeit in den von den Gasblasen durchsetzten Flüssigkeitsraum (6) vertikal nach oben durch den letzten Teil (11) des Verbindungskanals (9) erfolgt, und wobei in dem von den Gasblasen durchsetzten Flüssigkeitsraum (6) auf jedem Boden (1, 2, 3) teilzylindrische Wände (14, 15, 16,

17), die zueinander und mit den Halbkreisflächen der Verbindungskanäle (9, 13) sowie mit der Wand des Druckgehäuses (19) konzentrische Ringräume bilden, derart angeordnet sind, dass ein horizontaler Strömungsweg der Flüssigkeit entsteht, bei dem die Flüssigkeit vom zuführenden Verbindungskanal (9) zur Wand des Druckgehäuses (19) hin und dann auf der anderen Seite der Trennwand (18) in umgekehrter Richtung bis zu einem Raum (12) der zum abführenden Verbindungskanal (13) führt, geleitet wird.

2. Stoffaustauschkolonne nach Anspruch 1, dadurch gekennzeichnet, dass der von Gasblasen durchsetzte Flüssigkeitsraum (6) mit Drahtgeflecht gefüllt ist.

## Claims

1. Mass exchange column between a liquid flowing downwards and a gas lowing upwards, consisting of several trays (1, 2, 3) mounted one on top of the other, within a pressure vessel (19) and provided with apertures for the gas to flow through

and of connecting channels (9, 13) extending through from tray to tray which are formed by semicirular surfaces enclosing the axis of the pressure vessel (19) and by a central separating wall (18), the connecting channel (9) leading to the tray (2) on one hand being arranged on one side of the separating wall (18) and the outlet connecting channel (13) on the other hand being arranged on the other side of the separating wall,

whereby each tray (1, 2, 3) below the lower part (10) of the connecting channel leading to the low has no apertures so that the direction of the liquid into the liquid containing space (6) interspersed with gas bubbles is effected vertically upwards through the last part (11) of the connecting channel (9)

and whereby within the liquid space (6) interspersed by the gas bubbles on each tray (1, 2, 3) walls having a shape of a part of a cylinder (13, 14, 15) and forming concentric annular spaces with each other, with the semicircular surfaces of the connecting channels (9, 13) as well as with the wall of the pressure vessel (19) are disposed in such a manner that a horizontal flow path of the liquid is created in which the liquid is conducted from the inflow connecting channel (9) towards the wall of the pressure vessel (19) and thereafter on the other side of the separating wall (18) in reverse direction to a space (12) that leads to the outflow connecting channel (13).

2. Mass exchange column according to claim 1, characterized in that the liquid containing space (6) is filled with wire mesh.

## Revendications

1. Dispositif d'échange de masse entre un liquide s'écoulant vers le bas et pour un gaz montant vers le haut, composé de plusieurs plaques (1, 2, 3) disposées l'une au-delà de l'autre dans une colonne sous pression (19) et pourvues d'ouvertures pour le passage du gaz

et de canaux de jonction (9, 13) conduisant en une pièce d'une plaque à l'autre qui sont formées par des surfaces semicirculaires entourant l'axe de la colonne sous pression et par une paroi de séparation centrale (18), le canal de jonction (9) conduisant vers la plaque (2) étant disposée à un côté de la paroi de séparation (18) et le canal de jonction de sortie (13) à l'autre côté de la paroi de séparation, chaque plaque (1, 2, 3) au-dessous de la partie inférieure (10) du canal de jonction qui conduit vers la plaque étant dépourvue d'ouvertures de sorte que la direction d'écoulement du liquide soit inversée et que la sortie du liquide dans l'espace de liquide (6) entremêlé des bulles de gaz s'effectue verticalement vers le haut à travers de la dernière partie (11) du canal de jonction (9),

des parois (14, 15, 16) sous forme d'une partie d'un cylindre qui forment entre elles, avec les surfaces semicirculaires des canaux de jonction (9, 13) ainsi qu'avec la paroi de la colonne sous pression (19), des espaces annulaires concentriques, lesdites parois étant disposées de telle manière qu'un chemin d'écoulement horizontal du liquide est créé dans lequel le liquide est conduit du canal de jonction d'entrée (9) vers la paroi de la colonne sous pression (19) et ensuite à l'autre côté de la paroi de séparation (18) dans le sens inverse jusqu'à un espace (12) qui conduit vers le canal de jonction de sortie (13).

2. Dispositif d'échange de masse selon la revendication 1, caractérisé en ce que l'espace de liquide (6) entremêlé des bulles de gaz, est rempli de garnissage métallique.

Schnitt ABCD

Fig. 1

1

**Fig. 2**

Schnitt E-F

17
15
9

12
C
B

19
14
16
18

A    D

Schnitt G-H

9    12
11

Schnitt J-K

10